(19) Europäisches Patentamt
European Patent Office
Office européen des brevets

(11) EP 2 246 306 A1

(12) **EUROPEAN PATENT APPLICATION**

(43) Date of publication:
**03.11.2010 Bulletin 2010/44**

(21) Application number: **09158827.7**

(22) Date of filing: **27.04.2009**

(51) Int Cl.:
***C02F 1/00*** *(2006.01)* ***B01D 35/02*** *(2006.01)*
***B01D 39/18*** *(2006.01)* ***B01J 41/16*** *(2006.01)*
*B01D 39/08* *(2006.01)* *C02F 1/28* *(2006.01)*
*C02F 1/42* *(2006.01)* *C02F 1/50* *(2006.01)*

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicant: **Unilever N.V.**
**3013 AT Rotterdam (NL)**

(72) Inventors:
- **Perincheery, Aravindakshan**
  **Bangalore 560066 (IN)**
- **Pramanik, Amitava**
  **Bangalore 560066 (IN)**
- **Rastogi, Abhishek**
  **Bangalore 560066 (IN)**

(74) Representative: **Rosen Jacobson, Frans Lucas M. et al**
**Unilever Patent Group**
**Olivier van Noortlaan 120**
**3133 AT Vlaardingen (NL)**

# (54) A method and an apparatus for purification of water

(57) The present invention relates to a method and an apparatus for purification of water. The method of purification of water allows efficacious filtration of suspended particles and cysts whilst providing relatively high flow rate and is also useful for purification of laundry waste water.

FIG 2 – (a) Valve in OPEN position (b) Valve in closed position

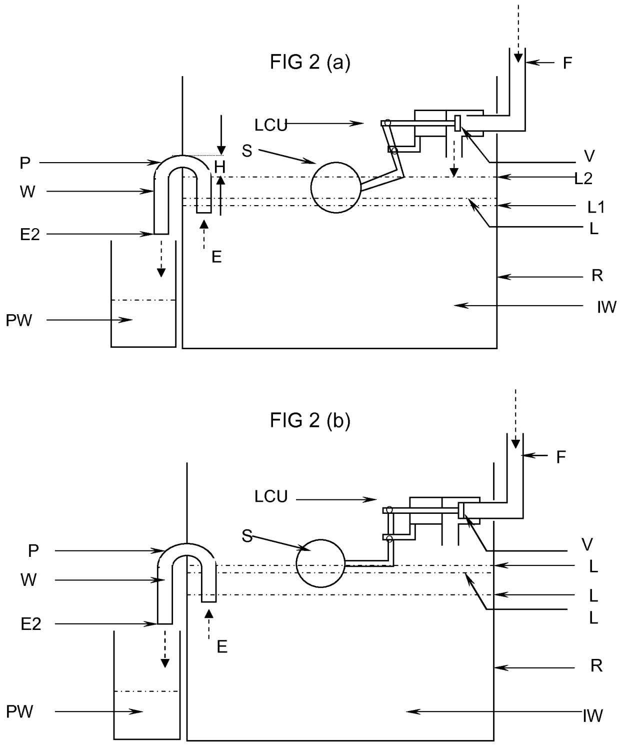


EP 2 246 306 A1

## Description

### TECHNICAL FIELD

The present invention relates to a method and an apparatus for purification of water.

### BACKGROUND AND PRIOR ART

Purification of water and in particular removal of total suspended solids and virus/cysts from water by filtration is an active field of research and development. There is a need for a filtration method that does not require external source of power is relatively easy and inexpensive to operate and provides relatively high flow rate of without clogging of the filter elements.

US4759857 (Acuna, 1988) describes an open siphon filtration method wherein a porous wick of an inverted J shape is used for filtration of suspended solids from a liquid with the short arm of the J-shape is immersed in a pool of liquid to be purified and the filtered water exiting through the long arm of the J-shape by a combination of a capillary and siphon action. Similar closed siphon filtration methods have also been described in the past. Such methods, however, do not provide adequate flow rate of water and/or the flow rate reduces with respect to time. Furthermore, such methods are relatively ineffective in removing fine particles and cysts.

One of the objects of the present invention is to overcome or ameliorate at least one of the disadvantages of the prior art, or to provide a useful alternative.

Another object of the present invention is to provide a method of purification of water that allows efficacious filtration of suspended particles and cysts whilst providing relatively high flow rate.

Yet another object of the present invention is to provide a method of purification of laundry waste water.

### SUMMARY OF THE INVENTION

According to a first aspect of the present invention there is provided a method for water purification comprising a step of filtering water through a porous wick wherein:

(a) one end of the wick is positioned in contact with impure water in a reservoir,
(b) the other end of the wick is positioned outside the reservoir at a level below a predetermined minimum water level in the reservoir,
(c) at least a portion of the wick between the two ends is positioned above a predetermined maximum water level in the reservoir, and
(d) the water level in the reservoir is maintained between the predetermined minimum level and the predetermined maximum level.

According to a second aspect of the present invention there is provided an apparatus for water purification comprising a reservoir, a porous wick, a level control unit and a water feed line, wherein:

(a) one end of the wick is positioned in contact with impure water stored in a reservoir,
(b) the other end of the wick is positioned outside the reservoir at a level below a predetermined minimum water level in the reservoir,
(c) at least a portion of the wick between the two ends is positioned above a predetermined maximum water level in the reservoir, and
(d) the level control unit comprises a level sensor adapted to sense the water level in the reservoir and is operatively connected to a valve that regulates flow of impure water from the water feed line into the reservoir, such that when the water level in the reservoir falls, the level sensor actuates the valve into an OPEN position and when the water level in the reservoir rises, the level sensor actuates the valve into a CLOSED position thereby ensuring that the water level in the reservoir is maintained between the predetermined minimum level and the predetermined maximum level.

According to a third aspect of the present invention there is provided an apparatus for water purification comprising a reservoir, a porous wick and an inverted-bottle, wherein:

(a) one end of the wick is positioned in contact with impure water stored in a reservoir,
(b) the other end of the wick is positioned outside the reservoir at a level below a predetermined minimum water level in the reservoir,

(c) at least a portion of the wick between the two ends is positioned above a predetermined maximum water level in the reservoir,
(d) the inverted bottle is positioned above the reservoir with the mouth of the inverted bottle at a level between the predetermined minimum level and the predetermined maximum level in the reservoir, such that when the water level in the reservoir falls below the predetermined minimum level, the water from the inverted bottle falls into the reservoir till the level of water in the reservoir is flush with the mouth of the inverted bottle, thereby ensuring that the water level in the reservoir is maintained between the predetermined minimum level and the predetermined maximum level.

According to a fourth aspect of the present invention there is provided an apparatus for water purification comprising a reservoir, and a porous wick, wherein:

(a) one end of the wick is positioned in contact with impure water stored in a reservoir,
(b) the other end of the wick is positioned outside the reservoir at a level below a predetermined minimum water level in the reservoir,
(c) at least a portion of the wick between the two ends is positioned above a predetermined maximum water level in the reservoir, and
(d) the apparatus comprises a water feed tank adapted for continuously supplying water to the reservoir and the reservoir has an outlet for the return flow to the water feed tank, the outlet being positioned at the predetermined maximum water level such that the water level in the reservoir is maintained between the predetermined minimum level and the predetermined maximum level.

## BREIF DESCRIPTION OF THE DRAWINGS

Figure 1 - A first embodiment of an apparatus for water purification.
Figure 2 - A second embodiment of an apparatus for water purification.
Figure 3 - A third embodiment of an apparatus for water purification.

## DETAILED DESCRIPTION OF THE INVENTION

Porous wick

The material of the wick preferably comprises ceramic, polymeric fiber or natural cellulosic fiber. More preferably, the material of the wick comprises polymeric fiber or natural cellulosic fiber. It is particularly preferred that the wick comprises natural cellulosic fiber. Natural cellulosic fiber is preferably selected from cotton, jute, coir, hemp, or linen. Polymeric fibers that may be used include rayon, nylon, polyester, polypropylene, polyethylene, Dacron, terene, orlon, dralon, wool, silk, viscose rayon, acetate rayon, Linten, lycra, and vyrene. Ceramic particles are typically bonded together or sintered to form a wick.
The shape of the wick is preferably elongate. The wick may be rigid or flexible, preferably flexible.
The material of the wick is preferably at least partly quaternized, i.e. at least a part of the wick material is chemically attached to quaternary ammonium group.
Cationic cotton fibers may be prepared by reacting with cationic reagents such as 3-chloro, 2-hydroxy propyl trimethyl ammonium chloride, 3-chloro, 2-hydroxy propyl dimethyldodecyl ammonium chloride, 3-chloro, 2-hydroxy propyl dimethyl tetradecyl ammonium chloride, 2,3 epoxypropyl trimethyl ammonium chloride etc. Typically a solution containing the cationic reagent and sodium hydroxide is padded to the cotton fiber and the reaction is completed by different methods such as pad-batch, pad-steam, pad-dry-cure or a combination of these. Various methods described in literature can be used including those described by Hashem et al (Textile Research J. 73(11), 1017-1023 (2003)) which is incorporated herein by reference.
The nitrogen content of said at least partly quaternized material is less than 0.4% by weight. The nitrogen content may be estimated by Kjeldahl method known in the literature, for example, in Sreenivasan and Sadasivan, Ind. Eng. Chem. Anal. Ed., 1939, 11 (6), pp 314-315.
The nitrogen content is related to the degree of substitution according to the formula:

$$DS = (162.15 * N) / (1401 - 151.64 * N)$$

Preferably, the degree of substitution of the at least partly quaternized material is less than 0.045.

The wick preferably comprises a biocide material. Although any biocide can be used, the biocide is preferably selected from halogen or halogen-based material or a metal.

The wick preferably comprises a filter aid. The filter aid is selected from a coagulant or a flocculant. The coagulant is preferably a multivalent metal salt. Salt of any bivalent metal including alkaline earth metal and zinc can be used. However, it is particularly preferred that the coagulant is a salt of a trivalent metal. Iron and aluminium salts are preferred, and aluminium salts are particularly preferred. Aluminium salts that can be used include aluminium chloride, aluminium sulphate, and polyaluminium chloride.

The wick preferably comprises an adsorbent. The adsorbent is preferably selected from a carbonaceous material. Carbonaceous material is preferably activated carbon.

It is preferred that the coagulant, the flocculant, the filtration aid, the adsorbent or the biocide material is added to the water to be purified.

Positioning of the wick

One end of the wick is positioned in contact with impure water in a reservoir. The other end of the wick is positioned outside the reservoir at a level below a predetermined minimum water level in the reservoir.

The terms "one end" and "the other end" refer to the positioning of the wick. Except for the positioning, the ends are interchangeable. Preferably, the wick is in the form of an inverted "J" shape with the short arm of the J-shape ending in "one end" in contact with impure water in the reservoir and the long arm of the J-shape ending in the other end which is positioned outside the reservoir at a level below the predetermined minimum water level in the reservoir.

At least a portion of the wick between the two ends is positioned above a predetermined maximum water level in the reservoir. The portion of the wick between the two ends is positioned such that the highest elevation of the portion of the wick between the two ends with respect to the maximum predetermined level is less than 5 cm, more preferably less than 2 cm, and most preferably less than 1 cm.

The water level in the reservoir is maintained between the predetermined minimum level and the predetermined maximum level. Any method for maintaining constant level known in the art can be used. The distance between the predetermined minimum level and the predetermined maximum level is preferably less than 5 cm, more preferably less than 2 cm, and most preferably less than 1 cm.

The total pore volume in the wick is preferably from 10 to 90% of the total wick volume. The average pore size of the wick is preferably less than 500 microns, more preferably less than 300 microns and most preferably less than 200 microns.

## DETAILED DESCRIPTION OF THE EMBODIMENTS

Referring to Figure 1, the apparatus for water purification comprises a reservoir (R), a porous wick (W) and an inverted-bottle (IB). The dashed arrows indicate the flow path of the water. One end (E1) of the wick is positioned in contact with impure water (IW) stored in a reservoir (R). The other end (E2) of the wick is positioned outside the reservoir (R) at a level below a predetermined minimum water level (L1) in the reservoir(R). A portion (P) of the wick between the two ends is positioned such that its highest elevation is at a distance (H) above a predetermined maximum water level (L2). During use, the inverted bottle (IB) is positioned above the reservoir with the mouth (M) of the inverted bottle (IB) at a level between a predetermined minimum level (L1) and the predetermined maximum level (L2) in the reservoir (R). Water in the inverted bottle (IB) fills the reservoir till the water level (L) in the reservoir (R) is flush with the mouth (M) of the bottle. The impure water (IW) in the reservoir is filtered through the wick (W) and purified water (PW) is collected at the end (E2) of the wick. As the impure water is filtered through the wick by a combination of capillary and siphon, the water level (L) in the reservoir decreases, and the water from the inverted bottle (IB) falls into the reservoir (R) till the water level (L) in the reservoir (R) is flush with the mouth (M) of the inverted bottle (IB), thereby ensuring that the water level (L) in the reservoir (R) is maintained between the predetermined minimum level (L1) and the predetermined maximum level (L2).

Now referring to Figure 2, the apparatus for water purification comprises a reservoir (R), a porous wick (W), a level control unit (LCU) and a water feed line (F) for feeding impure water in the reservoir. The dashed arrows indicate the flow path of the water. One end (E1) of the wick is positioned in contact with impure water (IW) stored in a reservoir (R). The other end (E2) of the wick is positioned outside the reservoir (R) at a level below a predetermined minimum water level (L1) in the reservoir. A portion (P) of the wick between the two ends is positioned such that its highest elevation is at a distance (H) above a predetermined maximum water level (L2). The level control unit (LCU) comprises a level sensor (S) which is a float. The float is operatively connected to the valve (V) that regulates flow of impure water from the water feed line (F) into the reservoir (R). As the impure water is filtered through the wick by a combination of capillary and siphon, the water level (L) in the reservoir decreases and the float actuates the valve into an OPEN position as

shown in Figure 2(a) such that the water in the reservoir (R) is replenished by the flow of water from the water feed line (F) thereby maintaining the water level in the reservoir above the predetermined minimum water level in the reservoir (L1). When the water level in the reservoir rises, the float actuates the valve into a CLOSED position as shown in Figure 2(b) thereby stopping the flow of water from the water feed line (F) into the reservoir (R) and maintaining the water level in the reservoir below the predetermined maximum level (L2). It will be appreciated that the level control unit (LCU) ensures that the water level in the reservoir is maintained between the predetermined minimum level and the predetermined maximum level.

Now referring to Figure 3, the apparatus for water purification comprises a reservoir (R) and a porous wick. The dashed arrows indicate the flow path of the water. One end (E1) of the wick is positioned in contact with impure water (IW) stored in a reservoir (R). The other end (E2) of the wick is positioned outside the reservoir (R) at a level below a predetermined minimum water level (L1) in the reservoir. A portion (P) of the wick between the two ends is positioned such that its highest elevation is at a distance (H) above a predetermined maximum water level (L2). The apparatus comprises a water feed tank (T) adapted for continuously supplying water to the reservoir (R) via a pump (P) and the reservoir (R) has an outlet (O) for the return flow to the water feed tank, the outlet being positioned at the predetermined maximum water level. During use, continuous pumping of water from the water feed tank (T) into the reservoir (R), in combination with the positioning of the outlet (O) ensures that the water level in the reservoir (R) is maintained between the predetermined minimum level (L1) and the predetermined maximum level (L2).

The various options described for the porous wick for e.g. materials used, shape, additional features like addition of biocide material, filter aid, positioning of the wick, pore volume of the wick, may be adapted in the several embodiments of the apparatus for water purification of the present invention.

## EXAMPLES

The invention will now be demonstrated with examples. The examples are for the purpose of illustration only and do not limit the scope of the invention in any manner.

Methods

*Preparation of cotton fiber wick*

5 g of cotton fiber (fibrous cotton waste supplied by Power Tools and Tackles, Bangalore) was arranged in such a way that the fibers formed a rope-like wick (of about 8 mm diameter and 20 cm length).

*Preparation of cationised cotton fiber wick*

Cationised Cotton fibers were prepared by padding technique as described in M. Hashem et al (Textile Research J. 73(11), 1017-1023 (2003)). 25 g of cotton fibers were padded with the 50 mL solution containing 1.49 g of Sodium hydroxide and 7.0 g of 3-chloro, 2-hydroxypropyl trimethyl ammonium chloride (CHTAC, 60% solution obtained from Aldrich). Sodium hydroxide and CHTAC were used in 2:1 mole ratio. Padded cotton fibers were kept in closed plastic bag at 70 degree C for 18 h. Quaternized cotton fibers were washed several times in deionized water. The nitrogen content was estimated by Kjeldahl method. The degree of substitution (DS) was calculated from the % nitrogen content (N) according to the following formula:

$$DS = (162.15 * N) / (1401 - 151.64 * N)$$

The reaction proceeds in two steps.

1. Formation of epoxide as intermediate step
2. Reaction of epoxide with cotton fiber

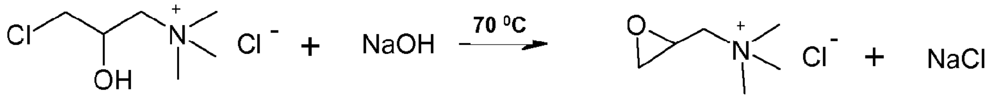


CHTAC

2,3-epoxy propyl trimethyl ammonium chloride

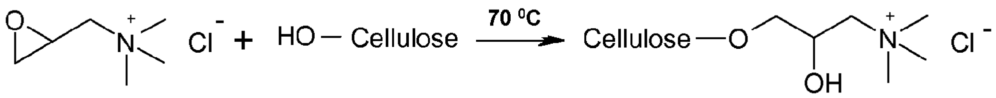


2,3-epoxy propyl trimethyl ammonium chloride

Cationic fibre

The cationised cotton fiber had a nitrogen content of 0.35% (0.042 DS) in comparison to unmodified cotton fabric of 0.02% N. By varying the amount of reactants (CHTAC and NaOH), cationised cotton fibers having different %N content and degree of substitution were obtained.

5 g of cationised cotton fiber was arranged in such a way that the fibers formed a rope-like wick (of about 8 mm diameter and 20 cm length).

*Preparation of Test Water I (with Arizona fine dust)*

Test water I, representative of impure water to be purified for drinking, was prepared by adding the following chemicals to 10 L of deionized water under stirring.

Calcium chloride (3.92 g)
Magnesium chloride (1.73 g)
Sodium sulfate (0.80 g)
Magnesium sulfate (1.19 g)
Ferrous sulfate (0.032 g)
Aluminium sulfate (0.058 g)
Manganese sulfate (0.00616 g)
Humic acid (0.025 g)
Sodium bicarbonate (8.50 g)
Arizona fine dust 0.2-30 micron particle size, supplied by Ellis Component, England. (1.5 g)

*Preparation of Test Water 11 (With carbon soot and non ionic surfactant)*

0.3 g of carbon soot N220 (supplied by Cabot India Ltd., Mumbai) was added to 1 L of 3% solution of Galaxy MW 258, (a lauryl alcohol ethoxylate obtained from Galaxy surfactants, India) in deionized water. This dispersion was sonicated for 2 hours using a bath sonicator to prepare a stock solution. Test water II was prepared by adding 200 mL of stock solution into 10 L of 0.05% sodium carbonate solution. Turbidity of this dispersion was 33 NTU. The test water II simulated laundry waste water having nonionic surfactant.

*Preparation of Test Water III (With carbon soot and anionic surfactant)*

Linear alkylbenzene sulphonic acid (Reliance Industries Limited, India) was neutralized with sodium carbonate to obtain sodium salt of linear alkylbenzene sulphonic acid. 0.3 g of carbon soot N220 was added to 1 L of 0.5% solution of sodium salt of linear alkylbenzene sulphonic acid in deionized water. This dispersion was sonicated for 2 hours using a bath sonicator. Test water III was prepared by adding 200 mL of stock solution into 10 L of 0.05% sodium carbonate

solution. The test water III simulated laundry waste water having an anionic surfactant

*Preparation of Test Water IV(with fluorescent polystyrene microspheres)*

Five L solution of fluorescent polystyrene microspheres of 4 micron size (obtained from Fluoresbrite) was added to 500 mL of deionized water under stirring and stored at 4 degree C temperature to obtain a stock solution. Test water IV was prepared by adding 30 mL of stock solution into 10 L water containing 2 g calcium chloride and 1 g of sodium bicarbonate. The microspheres simulated cysts.

*Determination of microsphere counts in water sample*

Water sample was diluted 5 times with deionized water. 5 mL of diluted water was filtered through 0.4 micron pore size membrane, under vacuum. The membrane was kept on glass slide and numbers of microspheres were visually counted using Olympus BX40 microscope.

*Determination of Turbidity*

Turbidity was determined using MERCK TURBI QUANT 1500T.

Effect of water level in the reservoir on the flow rate.

Effect of water level in the reservoir was investigated using the embodiment shown in Figure 3. Cotton fiber wick described earlier was used in the experiments. A pump (P) was operated at a flow rate of 50 mL/min in order to maintain the water level in the reservoir (L) between the maximum water level (L1) and minimum water level (L2). The difference between L1 and L2 was 0.5 cm. A portion (P) of the wick between the two ends was positioned such that its highest elevation above the predetermined maximum water level was about 0.5 cm. Experiment was also carried out with the pump (P) switched off and the outlet (O) closed such that as the water was filtered through the wick, the water level (L) in the reservoir was below the minimum level (L2).

Test water I was used in the experiments and the turbidity of the filtered water was found to be less than 0.5 NTU. The flow rate of the water filtered through the wick was measured at interval of 5 minutes each 5 minutes and results are tabulated below.

Table-1: Effect of water level in the reservoir on the flow rate

| Time, t (min) | Flow rate (mL/min) | |
|---|---|---|
| | Level maintained (L1>L>L2) | Level not maintained (L<L2) |
| 0 | - | - |
| 5 | 32 | 25 |
| 10 | 32 | 19 |
| 20 | 29 | 15 |
| 30 | 27 | 12 |
| 40 | 26 | 9 |

It is clear from the data that if water level in the reservoir was maintained above the level L2, flow rate was relatively high. When the water level in the reservoir was not maintained above the level L2, the flow rate decreased with time. Similar results were also obtained for cationised cotton fibers.

Effect of positioning of wick on the flow rate

Experiments were carried out in a manner similar to the experiments on determination of effect of water level in the reservoir. A portion (P) of the wick between the two ends was positioned such that its highest elevation above the predetermined maximum water level was varied from 0.2 cm to 4 cm. Test water I was used in the experiments and the turbidity of the filtered water was found to be less than 0.5 NTU. The flow rate of the water filtered through the wick was measured at t = 5 minutes in each case and the results are tabulated below.

Table-2 Effect of positioning of the wick on the flow rate

| H (cm) | Flow rate (mL/min) at t = 5 minutes |
|---|---|
| 0.2 | 70 |
| 0.5 | 32 |
| 1 | 25 |
| 2.5 | 15 |
| 4 | 10 |

It is clear from the above table that the flow rate reduces with the increase in the height difference H. Similar results were also obtained for cationised cotton fibers.

Effect of cationic modification of fibers on filtration efficacy

Experimental set up for test water cleaning was same as described in Figure 2. The height difference h was maintained at 0.7 cm. Wicks of cationic cotton (10 gm) and unmodified cotton fiber (10 gm) were prepared. The length of each wick was about 40 cm and diameter of each wick was about 0.8 cm. Test water IV comprising microspheres, that simulate cysts was used in the filtration experiments for comparing efficacy of cotton fiber wick and cationic fiber wick. The experiments were carried out in a dark room to avoid any florescence quenching of microspheres. Number of microspheres in input test water and output water were determined as described in procedure section. Filtration efficacy was evaluated in terms of microsphere removal, which implies cyst removal. The results are tabulated below:

Table-3: Microsphere removal of cotton fiber wick and cationised cotton fiber wick

| | Cotton fiber | Cationic cotton fiber |
|---|---|---|
| log removal of microspheres | 0.67 | 3.1 |

The results indicate that relatively higher log removal of microspheres is achieved using cationic cotton fibers as compared to cotton fibers.

Effect of degree of substitution on leaching

Cationised cotton fibers (25 gm) were serially washed with deionized water 10 times. The wash water after the $10^{th}$ wash was collected and its conductivity was measured. The measurements were repeated for cationised cotton fibers of varying degree of substitution, prepared according to the procedure described earlier, and the results are tabulated below.

Table 4 : Effect of degree of substitution on leaching of cationic compounds

| Amount of reactants and degree of substitution | | | | Conductivity of wash water after $10^{th}$ wash ( S/cm) |
|---|---|---|---|---|
| CHTAC (gm) | NaOH (gm) | % N | DS | |
| 7 | 2.98 | 0.3 | 0.036 | 1.9 |
| 10 | 4.26 | 0.35 | 0.042 | 2.1 |
| 15 | 6.38 | 0.43 | 0.052 | 9.3 |

Higher conductivity indicates higher leaching of cationic compounds in the purified water whilst low conductivity indicates reduced leaching cationic compounds. When cationic cotton fiber wick is used for water filtration, an unwanted side effect is leaching of cationic compounds in the purified water which must be minimized in order to ensure safety of water for human consumption, and the present inventors have found that wick made of cationised fibers having degree of substitution less than 0.045 shows improved efficacy as far as reduction in unwanted leaching of cationic compounds is concerned.

Filtration of simulated laundry waste water

Experimental set up was the same as described in Figure 3. The difference between L1 and L2 was 0.5 cm. The portion (P) of the wick between the two ends was positioned such that its highest elevation above the predetermined maximum water level was 0.7 cm. Experiment was carried out till the turbidity of clean water was less than 5. Both cationised and uncationised cotton fibers were compared for filtration of Test water II. Initial turbidity of Test Water II was 33 NTU before filtration. After filtration of about 2 L of Test water II at a flow rate of about 15 mL/minute, it was observed that turbidity of the water filtered through cationic cotton fiber was 5 NTU as compared to the turbidity of water filtered through cotton fiber which was 30 NTU.

Similar experiment was repeated with Test Water III with the height difference 3 cm. After filtering of about 800 mL at a flow rate of about 1 mL/minute, it was found that turbidity of the water filtered through cationic cotton fiber was less than 1 NTU as compared to the turbidity of water filtered through cotton fiber which was 32 NTU. These results indicate that the method of the present invention can be used for treatment of laundry waste water.

Water purification using inverted bottle device

Device of embodiment shown in Figure 3 was used in the experiments. A 20 L water bottle was filled with Test Water IV and positioned in an inverted position on the reservoir. The difference between L1 and L2 was 0.5 cm. Cotton fiber wicks (3 wicks of 5 g each) were used in the experiments. The portion (P) of each wick between the two ends was positioned such that its highest elevation above the predetermined maximum water level was 0.2 cm. The experiment was carried out as follows: 20 L water to be purified (Test Water IV) was filled in the bottle, which was then kept in an inverted position on the reservoir. As the water in the bottle is filtered out, empty bottle was replaced by another 20 L bottle filled with Test Water IV. Average flow rate of purified water filtration and turbidity of purified water were measured for each run and the results are tabulated below.

Table 5: Water purification using the inverted-bottle device

| Run | Volume of water filtered (L) | Flow rate (mL/min) | Turbidity (NTU) |
|---|---|---|---|
| 1 | 25.17 | 186.4 | 0.12 |
| 2 | 33.57 | 159.8 | 0.22 |
| 3 | 30.10 | 182.4 | 0.4 |
| 4 | 52.68 | 150.0 | 0.15 |

Overall, about 141.5 L of Test water IV was filtered at an average flow rate of 165 mL/min to a turbidity value of less than 0.5 NTU, without any need to change the wick.

It will be appreciated that the method of present invention and various embodiments of apparatus of the invention achieve efficacious filtration of suspended particles and mcirospheres which simulate cysts whilst providing relatively high flow rate. The method of the present invention is useful in filtration of drinking water as well as laundry waste water comprising relatively high amount of surfactants.

## Claims

**1.** A method for water purification comprising a step of filtering water through a porous wick wherein:

(a) one end of the wick is positioned in contact with impure water in a reservoir,
(b) the other end of the wick is positioned outside the reservoir at a level below a predetermined minimum water level in the reservoir,
(c) at least a portion of the wick between the two ends is positioned above a predetermined maximum water level in the reservoir, and
(d) the water level in the reservoir is maintained between the predetermined minimum level and the predetermined maximum level.

**2.** A method as claimed in claim 1 wherein said portion of the wick between the two ends is positioned such that the highest elevation of the portion of the wick between the two ends with respect to the maximum predetermined level is less than 5 cm.

**3.** A method as claimed in claim 1 or claim 2 wherein material of said wick comprises ceramic, polymeric fiber or natural cellulosic fiber.

**4.** A method as claimed in any one of the preceding claims wherein said material is at least partly quaternized.

**5.** A method as claimed in claim 4 wherein nitrogen content of said at least partly quaternized material is less than 0.4% by weight.

**6.** A method as claimed in any of the preceding claims wherein said wick comprises a biocide material.

**7.** A method as claimed in any one of the preceding claims wherein said wick comprises a filter aid.

**8.** A method as claimed in any one of the preceding claims wherein said wick comprises an adsorbent.

**9.** A method as claimed in any one of the preceding claims wherein a coagulant, a flocculant, a filtration aid, an adsorbent or biocide material is added to the water to be purified.

**10.** An apparatus for water purification comprising a reservoir, a porous wick, a level control unit and a water feed line, wherein:

(a) one end of the wick is positioned in contact with impure water stored in a reservoir,
(b) the other end of the wick is positioned outside the reservoir at a level below a predetermined minimum water level in the reservoir,
(c) at least a portion of the wick between the two ends is positioned above a predetermined maximum water level in the reservoir, and
(d) the level control unit comprises a level sensor adapted to sense the water level in the reservoir and is operatively connected to a valve that regulates flow of impure water from the water feed line into the reservoir, such that when the water level in the reservoir falls, the level sensor actuates the valve into an OPEN position and when the water level in the reservoir rises, the level sensor actuates the valve into a CLOSED position thereby ensuring that the water level in the reservoir is maintained between the predetermined minimum level and the predetermined maximum level.

**11.** An apparatus for water purification comprising a reservoir, a porous wick and an inverted-bottle, wherein:

(a) one end of the wick is positioned in contact with impure water stored in a reservoir,
(b) the other end of the wick is positioned outside the reservoir at a level below a predetermined minimum water level in the reservoir,
(c) at least a portion of the wick between the two ends is positioned above a predetermined maximum water level in the reservoir,
(d) the inverted bottle is positioned above the reservoir with the mouth of the inverted bottle at a level between the predetermined minimum level and the predetermined maximum level in the reservoir, such that when the water level in the reservoir falls below the predetermined minimum level, the water from the inverted bottle falls into the reservoir till the level of water in the reservoir is flush with the mouth of the inverted bottle, thereby ensuring that the water level in the reservoir is maintained between the predetermined minimum level and the predetermined maximum level.

**12.** An apparatus for water purification comprising a reservoir, and a porous wick, wherein:

(a) one end of the wick is positioned in contact with impure water stored in a reservoir,
(b) the other end of the wick is positioned outside the reservoir at a level below a predetermined minimum water level in the reservoir,
(c) at least a portion of the wick between the two ends is positioned above a
predetermined maximum water level in the reservoir, and
the apparatus comprises a water feed tank adapted for continuously supplying water to the reservoir and the reservoir has an outlet for the return flow to the water feed tank, the outlet being positioned at the predetermined maximum water level such that the water level in the reservoir is maintained between the predetermined minimum level and the predetermined maximum level.

FIG 1

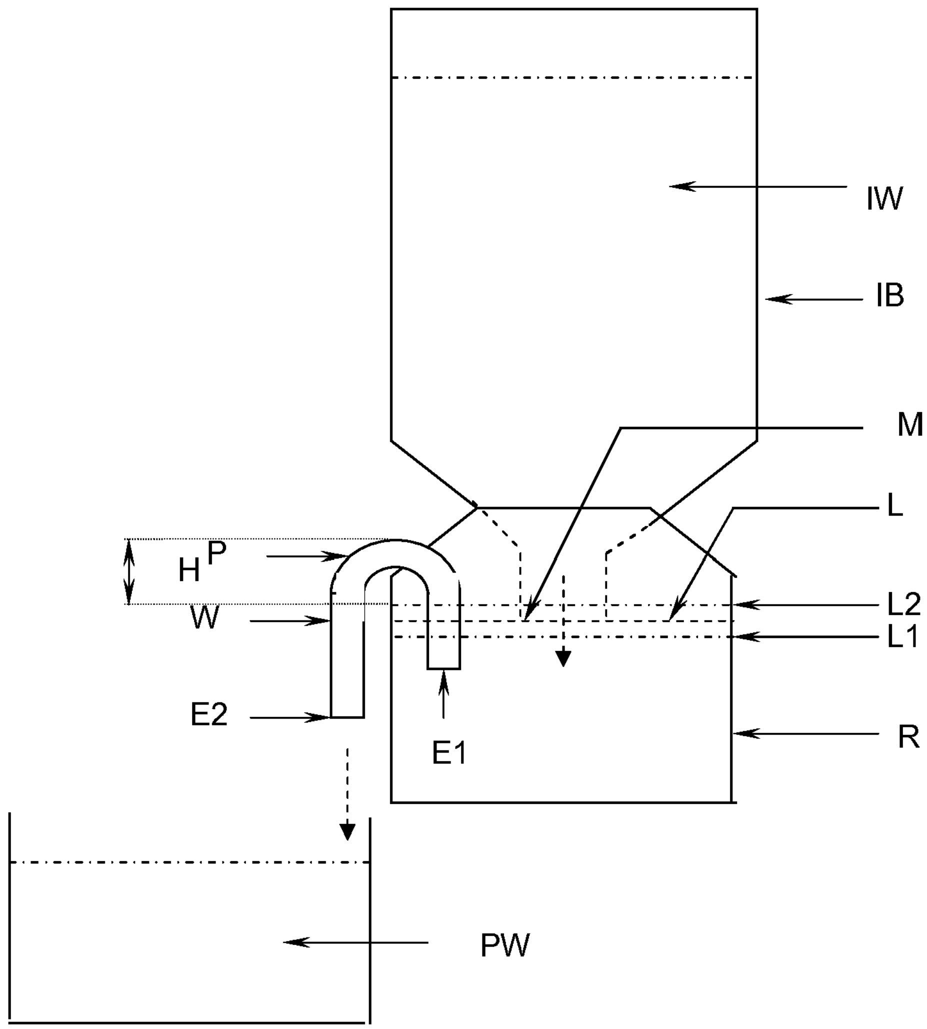

FIG 2 – (a) Valve in OPEN position (b) Valve in closed position

FIG 2 (a)

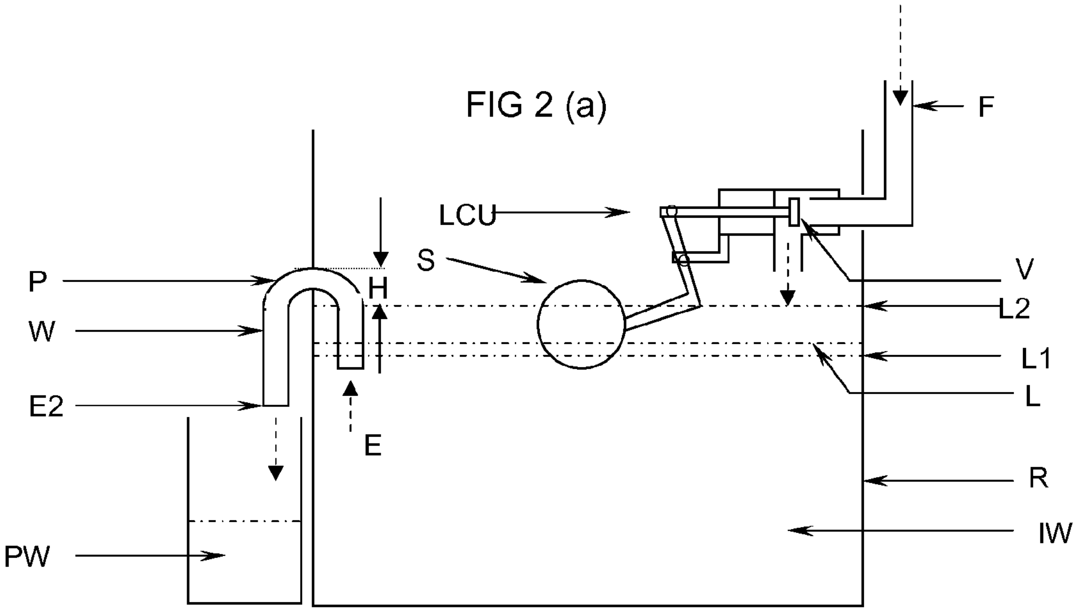


FIG 2 (b)

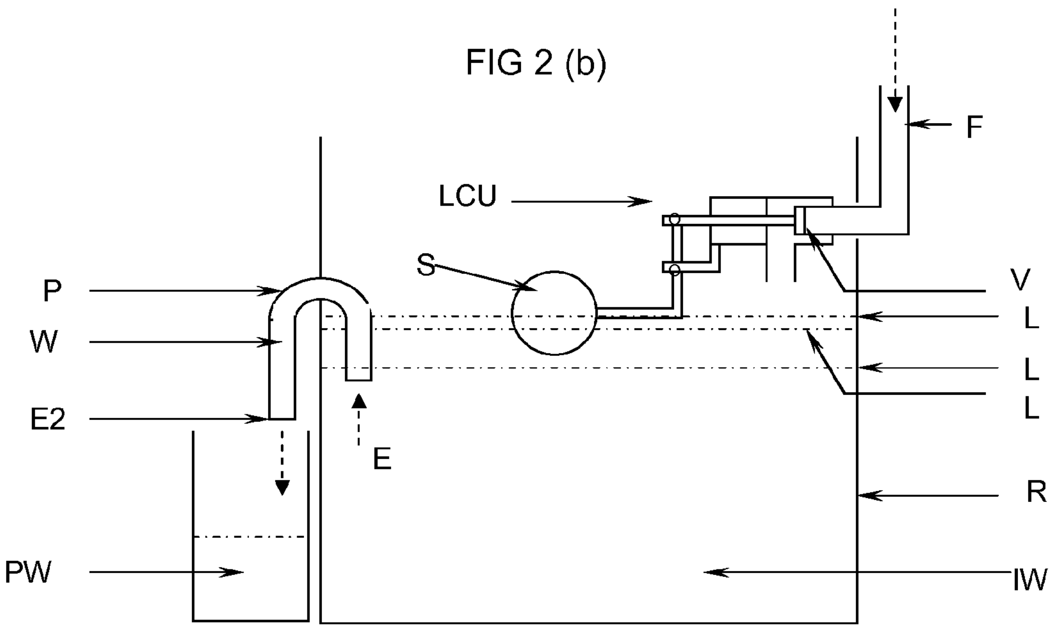

FIG 3

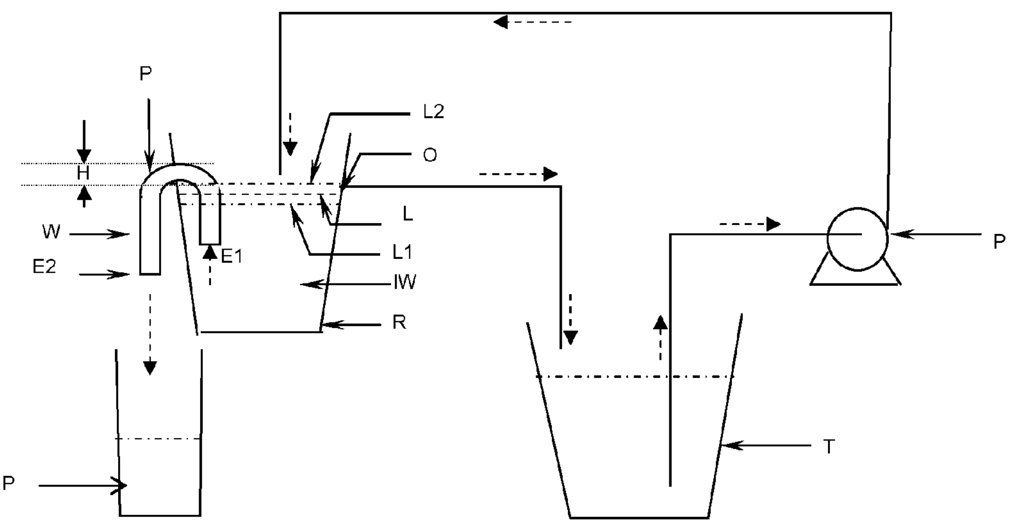

Europäisches Patentamt
European Patent Office
Office européen des brevets

# EUROPEAN SEARCH REPORT

Application Number
EP 09 15 8827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D<br><br>Y | US 4 759 857 A (ACUNA EDUARDO M [MX]) 26 July 1988 (1988-07-26)<br>* figure 1 *<br>* column 3, line 15 - line 40 *<br>* column 3, line 52 - line 55 *<br>* column 5, line 41 - line 50 *<br>* column 7, line 25 - column 8, line 27 *<br>----- | 1,3,<br>10-12<br>4-5 | INV.<br>C02F1/00<br>B01D35/02<br>B01D39/18<br>B01J41/16<br><br>ADD.<br>B01D39/08<br>C02F1/28<br>C02F1/42<br>C02F1/50 |
| X | US 2008/121588 A1 (MACPHERSON JOHN W [US]) 29 May 2008 (2008-05-29)<br>* figures 1,2 *<br>* paragraphs [0001], [0004] *<br>* paragraph [0012] - paragraph [0016] *<br>* paragraph [0020] *<br>----- | 1-3,6-9 | |
| Y | US 2003/140785 A1 (KOSLOW EVAN E [US]) 31 July 2003 (2003-07-31)<br>* paragraphs [0004], [0025], [0036], [0039], [0041], [0048] *<br>----- | 4-5 | |
| A | GB 191 594 A (HENRY JAMES MAGRATH) 18 January 1923 (1923-01-18)<br>* figure 5 *<br>* page 5, line 28 - line 36 *<br>----- | 10 | TECHNICAL FIELDS SEARCHED (IPC)<br>B01D<br>B01J<br>C02F |
| A | US 2009/014366 A1 (TAKEDA HATSUMI [JP] ET AL) 15 January 2009 (2009-01-15)<br>* figures 3,28 *<br>* paragraph [0102] - paragraph [0138] *<br>* paragraph [0192] - paragraph [0202] *<br>----- | 11 | |
| A | DE 32 03 218 A1 (SCHUESSLER GUENTER) 11 August 1983 (1983-08-11)<br>* the whole document *<br>-----<br>-/-- | 12 | |

The present search report has been drawn up for all claims

11

| Place of search | Date of completion of the search | Examiner |
|---|---|---|
| The Hague | 8 January 2010 | Châtellier, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 09 15 8827

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 791 063 A (HOU KENNETH C [US]; HOU CHUNG-JEN [US]; CHEN HAUNN-LIN [US]) 13 December 1988 (1988-12-13)<br>* column 31, line 20 - column 33, line 20 *<br>* claims 1,2 *<br>----- | 4-5 | |
| A | SHAOZAO TAN, GUANGJI LI, JIARUI SHEN, YUN LIU, MINHUA ZONG: "Study of Modified Polypropylene Nonwoven Cloth. II. Antibacterial Activity of Modified Polypropylene Nonwoven Cloths" JOURNAL OF APPLIED POLYMER SCIENCE, vol. 77, 2000, pages 1869-1876, XP002546035<br>* the whole document *<br>----- | 4-5 | |

TECHNICAL FIELDS SEARCHED (IPC)

The present search report has been drawn up for all claims

11

| Place of search | Date of completion of the search | Examiner |
|---|---|---|
| The Hague | 8 January 2010 | Châtellier, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

Application Number

EP 09 15 8827

## CLAIMS INCURRING FEES

The present European patent application comprised at the time of filing claims for which payment was due.

- [ ] Only part of the claims have been paid within the prescribed time limit. The present European search report has been drawn up for those claims for which no payment was due and for those claims for which claims fees have been paid, namely claim(s):

- [ ] No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

- [X] All further search fees have been paid within the fixed time limit. The present European search report has been drawn up for all claims.

- [ ] As all searchable claims could be searched without effort justifying an additional fee, the Search Division did not invite payment of any additional fee.

- [ ] Only part of the further search fees have been paid within the fixed time limit. The present European search report has been drawn up for those parts of the European patent application which relate to the inventions in respect of which search fees have been paid, namely claims:

- [ ] None of the further search fees have been paid within the fixed time limit. The present European search report has been drawn up for those parts of the European patent application which relate to the invention first mentioned in the claims, namely claims:

- [ ] The present supplementary European search report has been drawn up for those parts of the European patent application which relate to the invention first mentioned in the claims (Rule 164 (1) EPC).

Europäisches Patentamt
European Patent Office
Office européen des brevets

## LACK OF UNITY OF INVENTION
## SHEET B

Application Number
EP 09 15 8827

The Search Division considers that the present European patent application does not comply with the requirements of unity of invention and relates to several inventions or groups of inventions, namely:

1. claims: 1-10

   Method and apparatus for water purification by filtration through a wick.

   ---

2. claim: 11

   Apparatus for water purification by filtration through a wick comprising an inverted bottle, as described in claim 11.

   ---

3. claim: 12

   Apparatus for water purification by filtration through a wick comprising a water feed tank, as described in claim 12.

   ---

## ANNEX TO THE EUROPEAN SEARCH REPORT ON EUROPEAN PATENT APPLICATION NO. EP 09 15 8827

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-2010

| Patent document cited in search report | Publication date | Patent family member(s) | Publication date |
|---|---|---|---|
| US 4759857 A | 26-07-1988 | NONE | |
| US 2008121588 A1 | 29-05-2008 | NONE | |
| US 2003140785 A1 | 31-07-2003 | AT 390389 T | 15-04-2008 |
| | | BR 0302962 A | 06-07-2004 |
| | | CA 2444808 A1 | 07-08-2003 |
| | | CN 1509257 A | 30-06-2004 |
| | | EP 1470083 A1 | 27-10-2004 |
| | | HK 1065303 A1 | 28-07-2006 |
| | | JP 2005515892 T | 02-06-2005 |
| | | MX PA03010212 A | 10-03-2004 |
| | | TW 284055 B | 21-07-2007 |
| | | WO 03064330 A1 | 07-08-2003 |
| GB 191594 A | 18-01-1923 | NONE | |
| US 2009014366 A1 | 15-01-2009 | WO 2007094364 A1 | 23-08-2007 |
| | | KR 20080087901 A | 01-10-2008 |
| DE 3203218 A1 | 11-08-1983 | NONE | |
| US 4791063 A | 13-12-1988 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4759857 A, Acuna


### Non-patent literature cited in the description


- **Hashem et al.** *Textile Research J.,* 2003, vol. 73 (11), 1017-1023
- **Sreenivasan ; Sadasivan.** *Ind. Eng. Chem. Anal. Ed.,* 1939, vol. 11 (6), 314-315
- **M. Hashem et al.** *Textile Research J.,* 2003, vol. 73 (11), 1017-1023